# EUROPEAN PATENT SPECIFICATION

(11) **EP 1 485 624 B1**
(45) Date of publication and mention of the grant of the patent: **29.08.2007**
(21) Application number: 03714214.8
(22) Date of filing: 17.03.2003
(51) Int. Cl.: F04D 29/58, F04D 25/16

(54) **ENGINE-COOLING FAN ASSEMBLY WITH OVERLAPPING FANS**
MOTORGEKÜHLTE LÜFTERANORDNUNG MIT ÜBERLAPPENDEN FLÜGELN
ENSEMBLE VENTILATEUR DE REFROIDISSEMENT DE MOTEUR A VENTILATEURS SUPERPOSES

(30) Priority: 15.03.2002 US 364746 P
(43) Date of publication of application: 15.12.2004
(73) Proprietor: ROBERT BOSCH CORPORATION, Broadview, IL 60153 (US)
(72) Inventor: STEVENS, William, M., Maynard, MA 01754 (US); COTE, F., Raymond, Milton, MA 02186 (US)
(74) Representative: Hitchcock, Esmond Antony
(86) International application number: PCT/US2003/008167
(87) International publication number: WO 2003/078848

(56) References cited:
- EP-A- 0 979 745
- DE-A1- 3 831 081
- GB-A- 2 179 706
- US-A- 1 550 177
- US-A- 2 729 389
- US-A- 4 684 324
- US-A- 4 863 351
- US-A- 5 066 196
- US-A- 5 649 587
- US-A- 5 931 640
- US-B2- 6 491 502

## Description

A typical automotive engine-cooling fan assembly consists of one or more fans, each powered by an electric motor, and housed in a shroud which guides air through one or more heat exchangers. Each motor is typically supported by arms, or stators, which are supported by the shroud. Such a fan assembly can be placed upstream or downstream of the heat exchangers, which typically include both a radiator which cools the engine and an air conditioning condenser.

A fan assembly is required to efficiently provide the required amount of engine cooling while satisfying various noise criteria. These noise criteria usually concern both broadband noise and tones. At a given fan power, broadband noise is often found to be minimized by maximizing fan diameter, although fan noise, and particularly the tonal content of fan noise, increases if the fan overlaps an edge of the heat exchanger.

Fan efficiency is also often improved by maximizing fan diameter. One reason for this is that power expended in accelerating air through the fan is generally not recovered. This power is minimized by maximizing the fan area. Another reason is that a larger fan area provides better coverage of the heat exchangers. Due to the typically shallow depth of the fan assembly, the velocity of air through the heat exchanger cores outside the fan projected area is generally less than that inside the fan projected area. This flow non-uniformity increases the mean pressure drop, and decreases the effectiveness of the heat exchangers.

When the heat exchanger core area is approximately square, flow non-uniformity can be made reasonably small by using a single fan, the diameter of which is approximately equal to the length of a side of the square. When one dimension (typically the width) of the core is larger than the other dimension (typically the height), noise considerations generally limit the fan diameter to the smaller dimension. As a result, flow non-uniformity for a non-square core is generally larger than in the case of a square core, unless the aspect ratio of the core (the ratio of the longest side to the shortest side) is large enough to make practical the fitting of two fans side by side. Although the ideal core aspect ratio for a dual-fan assembly is two, such an assembly can offer a significant advantage in flow non-uniformity at smaller aspect ratios.

A measure of the extent to which a given fan arrangement provides good coverage of a heat exchanger core is the area ratio A_{f}/A_{c}. This is the ratio of the total fan disk area A_{f} to the area of the heat exchanger core A_{c}. For a single fan on a square core, the largest area ratio achievable without overlapping the edge of the core is π/4, or .79. This is also the largest value achievable with a side-by-side dual-fan arrangement on a core of aspect ratio 2.

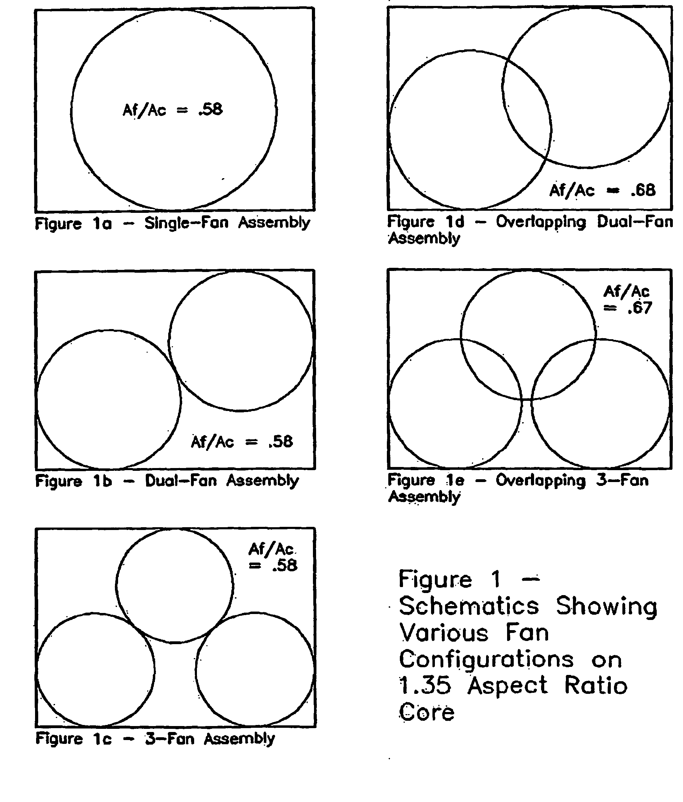

In practice, many automotive heat exchangers have an aspect ratio approximately midway between one, corresponding to a square and ideal for a single fan, and two, ideal for a dual fan. This presents a problem for the fan designer in that neither a single-fan configuration nor a conventional dual-fan arrangement has a favorable flow distribution through the cores. An aspect ratio of approximately 1.35 represents perhaps the worst case, where the ratio of fan area to core area is equally small for single-fan and dual-fan assemblies. Schematics of these two arrangements are shown in Figures 1a and 1b. For both single-fan and dual-fan assemblies, the area ratio is approximately .58. In fact, a 3-fan assembly, as shown in Figure 1c, also has an area ratio of .58. Because the total fan area of the configurations shown in Figures 1a, 1b, and 1c are approximately equal, the efficiency and noise of these configurations will be approximately equal, as well.

In addition to the problem of maximizing fan area, another problem sometimes faced is maximizing fan power. This sometimes favors the use of multiple fans. In particular, in those cases where the largest motor available is too small to deliver the required cooling in a single-fan system, a multiple-fan assembly can be required, even at the expense of optimum system efficiency. This situation can be encountered when designing electric cooling systems to replace engine driven fans for the cooling of light trucks. It also is likely to be encountered in the cooling of the new generation of fuel cell vehicles.

EP-A-0979745 of Fiat Auto SpA discloses a fan unit for the heat-exchange assembly of a motor vehicle, comprising two fans mounted alongside each other and driven from a common motor. The two fan rotors are mounted within an opening in a crossmember of the vehicle. A connecting fairing guides flow of air between the fans and the core of the heat exchanger.

US-A-2729389 of G H Koch discloses a simple room ventilation fan designed to be fitted in a window. Two fans with respective motors, motor mounts and connecting straps are mounted so that, when viewed in the axial direction, their blades overlap. Air enters a screen at the front of a housing for the two fans, and also through a series of openings in semi-cylindrical side walls of the housing, and exits through a screen at the rear of the housing to atmosphere. The connecting strap for a first fan is upstream of its fan, while the connecting strap for the second fan is downstream of its fan.

In accordance with the present invention, there is provided an automotive engine-cooling fan assembly, comprising: a first fan driven by a first motor, said first motor being supported by a first motor mount, said first motor mount being supported by a first set of arms, and said first set of arms being supported by a shroud; a second fan driven by a second motor, said second motor being supported by a second motor mount, said second motor mount being supported by a second set of arms, and said second set of arms being supported by said shroud; and a heat exchanger having a core, said shroud serving to guide the flow of air at least a portion of the distance between said fans and said heat exchanger; said first fan and said second fan each being characterised by a diameter; said first fan and said second fan each comprising a hub and a plurality of elongated blades, each of said blades having a root, a tip, a leading edge, and a trailing edge; said first and second fans overlapping each other when viewed axially from the upstream or downstream direction; and said first set of arms being located upstream of said first fan and said second set of arms being located downstream of said second fan.

We describe below embodiments of automotive engine-cooling fan assembly using two or more fans, where at least two fans overlap each other when viewed from the upstream or downstream direction. The set of arms which supports the motor driving one fan of an overlapping pair of fans is upstream of that fan, and the set of arms which supports the motor driving the other fan of the pair is downstream of that other fan. Overlap of a pair of fans can be demonstrated by projecting those fans on to a plane perpendicular to the axis of one or both of the fans. A first circular disk centred on the projection of the axis of one fan (the diameter of the first disk being equal to the diameter of that fan).

In a preferred embodiment, the axial position of the set of arms which supports the motor driving each fan of an overlapping pair is substantially the same as the axial position of the other fan of that pair. The set of support arms for each fan of the pair excludes any members which would interfere with the placement of the other fan of the pair at the same axial location as that set of arms. This allows the module to be quite compact in the axial direction./

Preferably, a small clearance gap is maintained between said shroud and each of the fans along the portion of the fan's circumference outside the overlap region. Preferably, a projection of the shroud opening, in a plane perpendicular to one or both of the fan axes is two generally circular elements that overlap in the region of fan overlap.

In a preferred embodiment, the two motors are approximately the same distance from the heat exchanger core. In this embodiment the distance between the core and the farthest point on one of the motors is between 0.8 and 1.25 times the distance between the core and the farthest point on the other motor. The length of the motors is often a limiting factor in making a fan assembly which is axially compact.

When a fan assembly according to a most preferred embodiment is viewed axially from upstream or downstream, the projected area of the set of arms supporting the motor driving one fan of the overlapping pair falls outside the projected disk area of the other fan of the pair.

In one embodiment the fan assembly is a dual-fan assembly. This arrangement provides good flow uniformity through a heat exchanger core in those cases where single-fan assemblies or conventional side-by-side dual-fan assemblies cannot, namely in those cases where the shroud covers a rectangular area of the heat exchanger core, and where the aspect ratio of that rectangular area is approximately midway between 1 and 2. In a preferred embodiment the assembly is a dual-fan system and is sized to move air through a core area with an aspect ratio of approximately 1.25 to 1.8. In a most preferred embodiment the assembly is a dual-fan system and the fan diameters are equal, or, if unequal, the fan diameter of the smaller fan is greater than 85 percent of the diameter of the larger fan, and the diameter of the larger fan is greater than 75 percent of the smaller dimension of the core area.

In other embodiments the fan assembly comprises more than two fans.

In preferred embodiments the extent of overlap, when measured in a plane which contains the rotation axis of at least one fan of an overlapping pair of fans and at least one point on the axis of the other fan, is greater than 10 percent of the diameter of the smaller of the two fans, and less than the blade span of the smaller fan. The diameter of the fan is taken to be the swept diameter of the fan blade tip, and the blade span is the radial distance from the hub to the fan blade tip. Overlap, diameter, and blade span are exclusive of any rotating tip band. Any greater overlap is likely to generate acoustic tones. The benefits of the invention will be relatively small if less overlap is used.

Although in some embodiments the fans are powered by hydraulic motors, in preferred embodiments they are powered by electric motors. One advantage of the invention is that it allows the use of two or more large motors in a relatively small package, where a side-by-side arrangement would limit the fan diameter to a size unable to absorb a large amount of motor power efficiently, and where an overlapping fan arrangement using two downstream or two upstream motor supports would be too deep to fit in the vehicle.

In preferred embodiments the shroud forms a plenum between the heat-exchanger core and the fans, and that plenum is deeper in those areas adjacent to fans with upstream support arms. This maximizes plenum depth for a given axial depth of shroud, and minimizes flow non-uniformity.

In preferred embodiments, recirculation is controlled by maintaining a small gap between each fan and the shroud in the non-overlapping portion of the fan circumference - the portion which is not upstream or downstream of any other fan. This gap is preferably less than 2 percent of the fan diameter.

In preferred embodiments, banded fans are used. This type of fan, which has a rotating band attached to the blade tips, can maintain tip loading more effectively than a free-tipped fan in the overlap region.

The direction of rotation is specified relative to a viewer axially downstream of the assembly. In some embodiments one fan of an overlapping pair rotates in me clockwise direction and the other fan of the pair rotates in the counter-clockwise direction. This causes the fan blades to move in the same direction in the overlap region. This arrangement increases the total swirl velocity in the overlap region, reducing efficiency compared to the arrangement where the blades move in the opposite direction in the overlap region. However, the reduced relative velocity at the downstream .fan can reduce fan noise relative to the alternative arrangement. Another advantage is that, due to the motor mounting arrangement, both fan motors have the same rotation direction relative to the motor. In some cases, identical motors can be used.

In other embodiments both fans of an overlapping pair rotate in the same direction (both clockwise or both counter-clockwise). This causes the fan blades to move in opposite directions in the overlap region. Due to swirl cancellation, this arrangement can be somewhat more efficient than the arrangement where the blades move in the same direction in this region. However, the increased relative velocity at the downstream fan can increase fan noise relative to the alternative arrangement.

In preferred embodiments the two fans of an overlapping pair have unequal numbers of blades. Also in preferred embodiments, the blade tips of at least one fan of an overlapping pair are variably spaced.

In preferred embodiments, both fans of an overlapping pair have blades which are forward-swept at their tips. This geometry has been found to have good efficiency as well as reduced fan noise relative to other geometries. This may be due to the fact that forward-swept blades have a relatively high tolerance of flow unsteadiness, such as that experienced when the blades move into, and out of, the overlap region.

In preferred embodiments, one fan of an overlapping pair rotates in the clockwise direction and the other fan rotates in the counter-clockwise direction, and the downstream fan has tip leading-edge sweep which is opposite the upstream fan tip trailing-edge sweep. In this configuration the downstream fan crosses the wake of the upstream fan in such a way that the unsteady forces on the different blade sections tend to cancel each other out, thereby reducing acoustic tones.

In other preferred embodiments, both fans of an overlapping pair rotate in the same direction, and the downstream fan has tip leading-edge sweep which is of the same sign as the upstream fan tip trailing-edge sweep. This is another configuration offering reduced tones.

In a most preferred embodiment, the upstream fan of an overlapping pair has root trailing-edge sweep in the direction opposite the tip trailing-edge sweep.

The overlapped fans can be placed either upstream or downstream of the heat exchanger in the assembly, or be placed between two heat exchangers.

The motors can be DC motors, and can be either mechanically or electronically commutated.

In preferred embodiments, the shroud comprises a barrel surrounding at least one of the pair of overlapping fans, and that barrel extends into the region upstream or downstream of the other fan of the pair, and contributes to the support of the mount of the motor of that other fan.

In the drawings:-

Figure 1a shows a schematic of a single-fan assembly and a 1.35 aspect ratio core.

Figure 1b shows a schematic of a non-overlapping dual fan assembly and a 1.35 aspect ratio core.

Figure 1c shows a schematic of a non-overlapping 3-fan assembly and a 1.35 aspect ratio core.

Figure 1d shows a schematic of an overlapping dual-fan assembly and a 1.35 aspect ratio core.

Figure 1e shows a schematic of an overlapping 3-fan assembly and a 1.35 aspect ratio core.

Figure 2 shows an axial view of a fan blade in which the leading edge and trailing edge sweep angles are defined.

Figure 3 shows a sectional view of an overlapping dual-fan assembly according to the present invention, wherein the blades are shown in a "swept" view.

Figure 4 shows an axial upstream view of an overlapping dual-fan assembly according to the present invention.

Figure 5 shows an axial downstream view of an overlapping dual-fan assembly according to the present invention.

Figure 6 shows a perspective view of an overlapping dual-fan assembly according to the present invention.

Figure 7 shows fan blade outlines in the overlap region, where both fans rotate in the same direction and the blade geometry is that of a preferred embodiment of the present invention.

Figure 8 shows fan blade outlines in the overlap region, where the fans rotate in opposite directions and the blade geometry is that of another preferred embodiment of the present invention.

Figure 9 shows an axial downstream view of an overlapping dual-fan assembly according to the present invention, showing fans with uneven blade tip spacing and the shroud barrel surrounding the downstream fan extended into the region downstream of the upstream fan.

Figures 1a-1c show schematic views of several different non-overlapping fan configurations on a core of 1.35 aspect ratio. Figure 1a shows a single-fan arrangement, where the fan is the largest that will fit without overlapping the core boundaries. The area ratio, or ratio of fan disk area to core area, is .58. Disk area is defined as the area of a circular disk with a diameter equal to the diameter of the fan. Although in some situations an overlap of the core boundaries is permissible, large amounts of overlap have been found to result in an increase in fan noise.

Figures 1b and 1c show non-overlapping (side-by-side) configurations for two- and three-fan configurations, also on a 1.35 aspect ratio core. These configurations also have an area ratio of approximately .58. Here fan disk area is taken to be the sum of the disk areas of the fans. In Figures 1b and 1c the blade tips of adjacent fans would touch at the point of tangency of the fan disks. In practice, the presence of any rotating tip band and the required running clearances would reduce the area ratio to a value somewhat less than that calculated.

Figures 1d and 1e show schematic views of overlapping fan configurations on a 1.35 aspect ratio core. Overlapping fan configurations in general offer larger area ratios than non-overlapping configurations at this core aspect ratio. Figure 1d is a dual-fan arrangement which offers an area ratio of .68. Figure 1e is a 3-fan arrangement that has an area ratio almost as high. Here fan disk area is taken to be the sum of the disk areas of the fans, minus the overlap area.

In addition to the better core coverage offered by overlapping fans, these configurations also improve fan efficiency in those cases where the fraction of fan power expended in accelerating air through the fan is significant compared to that expended in overcoming the resistance of the core. This portion of fan power can be reduced by minimizing axial velocity through the fan by maximizing fan disk area.

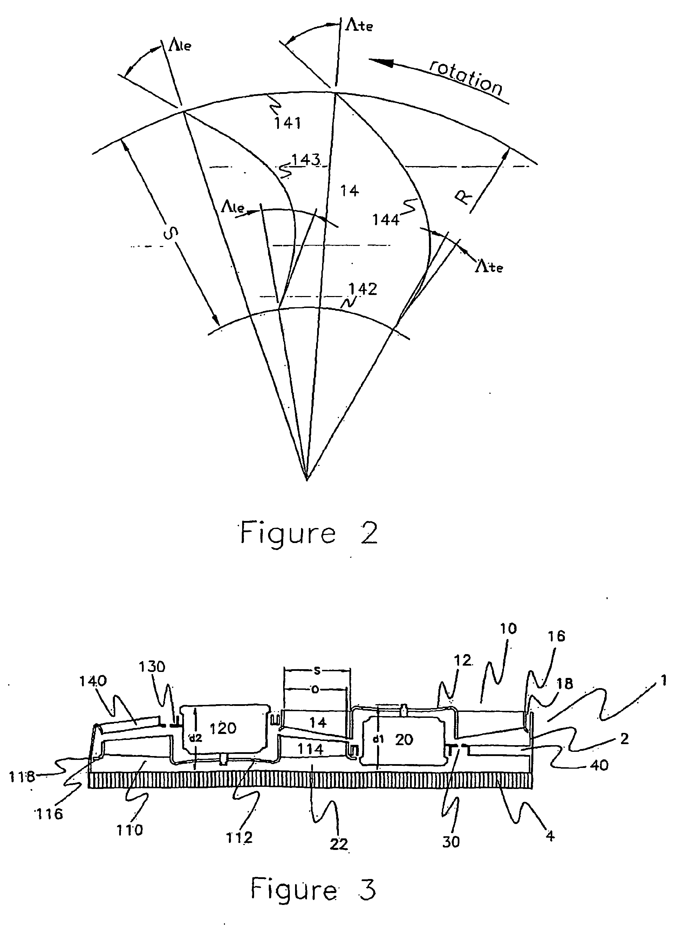

Figure 2 shows the outline of a fan blade. An arrow indicates the direction of rotation. Blade 14 has a tip 141, a root 142, a leading edge 143 and a trailing edge 144. The leading edge sweep angle Λₗₑ and trailing edge sweep angle Λₜₑ are shown at the root and tip of the blade. Each of these sweep angles is defined as the angle between the tangent to the blade edge at a given radius and the radial line to the edge at that radius. The sign of the sweep angle is defined relative to the rotation direction of the fan. The fan shown in Figure 2 has leading and trailing edge sweep angles which are positive at the tip and negative at the root. Both the leading and trailing edges are therefore considered forward-swept at the tip (swept in the direction of rotation) and back-swept at the root (swept opposite the direction of mtation). Radial dimension "R" as shown is one half the fan diameter. The blade span is defined as the radial extent of the blade, and is shown as "s."

Figure 3 is a section through an overlapping dual-fan assembly according to the present invention, mounted downstream of heat exchanger core 4. The plane of the section contains the rotation axes of two overlapping fans 10 and 110. Fan 10 is powered by electric DC motor 20, which is attached to mount 30. Mount 30 is supported by arms 40, which are supported by shroud 2. Fan 110 is powered by electric DC motor 120, which is attached to mount 130. Mount 130 is supported by arms 140, which are supported by shroud 2. Fans 10 and 110 overlap each other in an overlap region 22. Support arms 40 are placed upstream of fan 10. This means that the flow of air encounters support arms 40 before it encounters fan 10. Support arms 140 are placed downstream of fan 110. The flow of air encounters support arms 140 after it encounters fan 110. It can be seen that the assembly is extremely compact axially. Mounts 30 and 130, support arms 40 and 140, and shroud 2 are molded as a single plastic part.

Fan blades 14 and 114 are represented by a "swept" view showing the axial extent of the blades as a function of radius. The blades are attached to rotating tip bands 16 and 116, which help maintain blade loading in overlap region 22. Rotating tip bands 16 and 116 have close running clearances 18 and 118 with respect to shroud 2 outside of this region.

These clearances are less than 2 percent of the fan diameter. These close clearances minimize the re-circulation that otherwise would be created by the significant pressure rise developed by an automotive engine-cooling fan.

In this embodiment, the fans are of equal diameter. Blade span is shown as "s." The extent of blade overlap is shown as dimension "o." Dimension "o" is slightly smaller than dimension "s." Blades 14 do not pass behind fan hub 112 and blades 114 do not pass in front of hub 12. This limitation on overlap minimizes the acoustic tones generated by fans 10 and 110.

The maximum distance between the face of core 4 and motor 20 is shown as d1, and the maximum distance between the face of core 4 and motor 120 is shown as d2. d1 is shown to be approximately equal to d2. In preferred embodiments the difference between d1 and d2 is less than 25 percent of the smaller of d1 and d2.

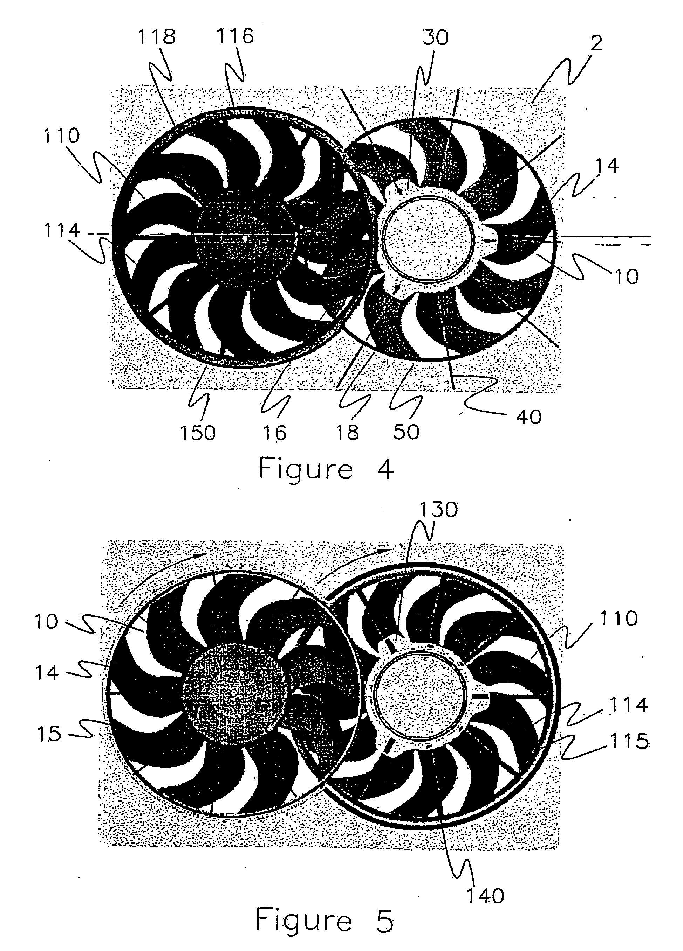

Figure 4 is an axial upstream view of the overlapping dual-fan assembly of Figure 3. Fans 10 and 110 clearly overlap each other in this view. Fan 10 has nine blades 14 and fan 110 has eleven blades 114. Fan tones are minimized by using different numbers of blades on the two fans.

It can be seen that upstream support arms 40 do not include any members whose projected area falls within the projected disk area of fan 110. This arrangement allows fan 110 and support arms 40 to be located in the same axial position, thereby minimizing the axial extent of the fan assembly. Although support arms 40 are shown as a set of radially-extending elements, many other configurations of support arms can be used. For example, non-radial, or swept, support arms can be used, and cross-bracing or intermediate ring structures can provide additional support.

Although motor mount 30 is shown as a generally circular member with several mounting tabs, many other configurations of motor mount can be used.

The area of heat exchanger core covered by shroud 2 is approximately rectangular, with aspect ratio of 1.44. Each fan has a diameter approximately .79 times the smaller dimension of this area.

The cross-sections of upstream support arms 40 are slender, and are oriented so as to minimize the obstruction to the flow, and to ensure moldability in the area outside the circumference of shroud barrel 50.

The clearance gap 18 between band 16 and shroud barrel 50, and the clearance gap 118 between band 116 and shroud barrel 150 are less than 2 percent of the respective fan diameters in regions outside the overlap region 22.

Figure 5 is a downstream axial view of the fan assembly shown in Figures 3 and 4. It can be seen that support arms 140 do not include any members whose projected area falls within the projected disk area of fan 10. Support arms 140 can be seen to be a set of radially-extending stator blades, each angled with respect to the axial direction, as is often the case with support arms placed downstream of an engine-cooling fan. As with the upstream supports arms, many other support arm configurations can be used.

Arrows indicate that fans 10 and 110 both rotate in the same direction (clockwise in this view). This arrangement causes blades 14 to move counter to blades 114 in the overlap region. In this region, swirl generated by fan 110. is somewhat cancelled by that generated by fan 10. This arrangement can result in somewhat higher efficiency than the arrangement where the blades move in the same direction in the overlap region.

Fan blades 14 and .114 have leading edges 15 and 115 which are forward-swept at the blade tips. Forward-swept blades generally show a high tolerance to flow unsteadiness, such as that experienced by the blades of overlapping fans. This tolerance can result in higher efficiency and lower noise when compared to a back-skewed design.

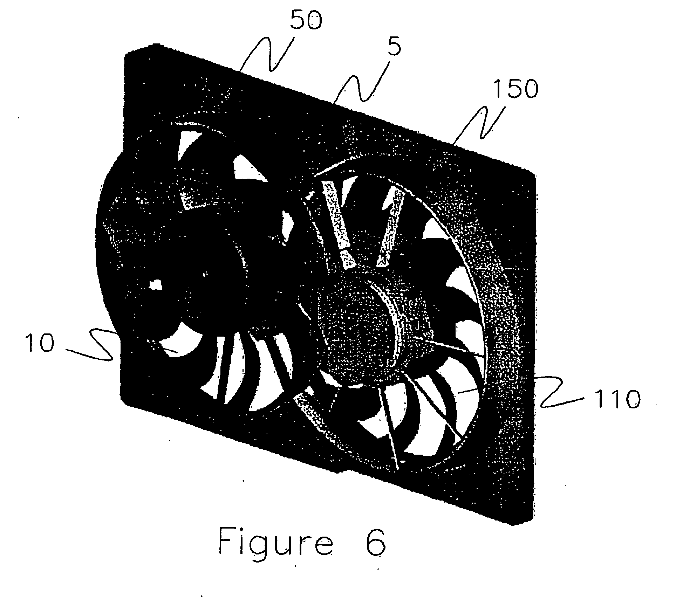

Figure 6 is a perspective view of the fan assembly shown in Figures 3, 4 and 5. It can be seen that the shroud plenum 5 is deeper in the area of shroud 2 adj acent to downstream fan 10 than it is in the area adjacent to upstream fan 110. This arrangement maximizes the efficiency of the assembly by improving the uniformity of flow through the portion of the core adjacent to fan 10, while maintaining the axial compactness of the assembly. Shroud barrels 50 and 150 provide leakage control outside of the overlap region.

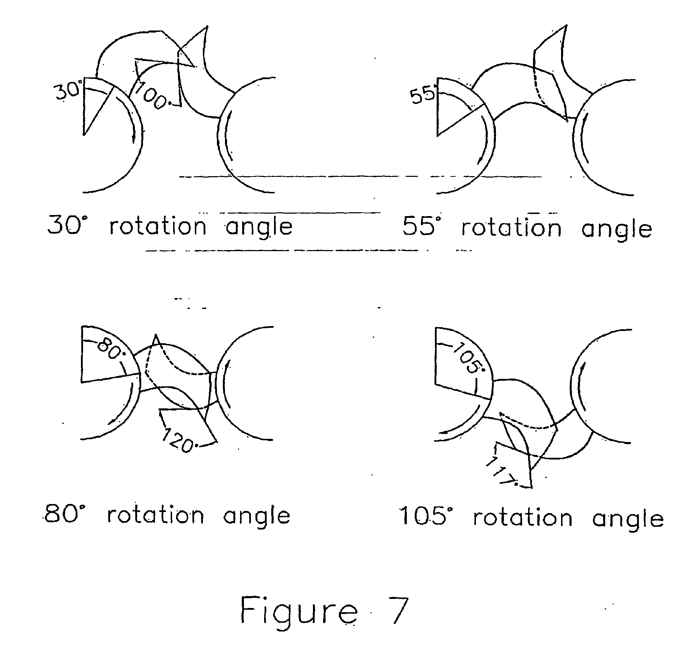

Figure 7 is a detail view of the overlapping fan assembly shown in Figures 3 through 6. It shows the fan blade outlines in the overlap region, viewed axially from downstream. Both fans rotate in the clockwise direction. The upstream blade trailing edge is forward-swept at the tip and back-swept at the root, and the downstream blade leading edge is forward-swept at the tip. The downstream blade is shown at four different rotation angles, and the upstream blade is rotated in each case to show the intersection angle between the tip section of the downstream blade leading edge and the upstream blade trailing edge. Since the axial space between the fans is small, this angle is approximately the angle at which the downstream blade crosses the wake of the upstream blade. In order to minimize fan tones, this angle should ideally be near 90 degrees, but due to the variable geometry presented by the rotating blades, such an ideal arrangement cannot be achieved. The arrangement shown exhibits favorable intersection angles at three of the four rotation angles shown. At the 55 degree rotation angle the downstream blade leading edge is momentarily parallel to the upstream blade trailing edge, but this condition will only exist for a short period of time.

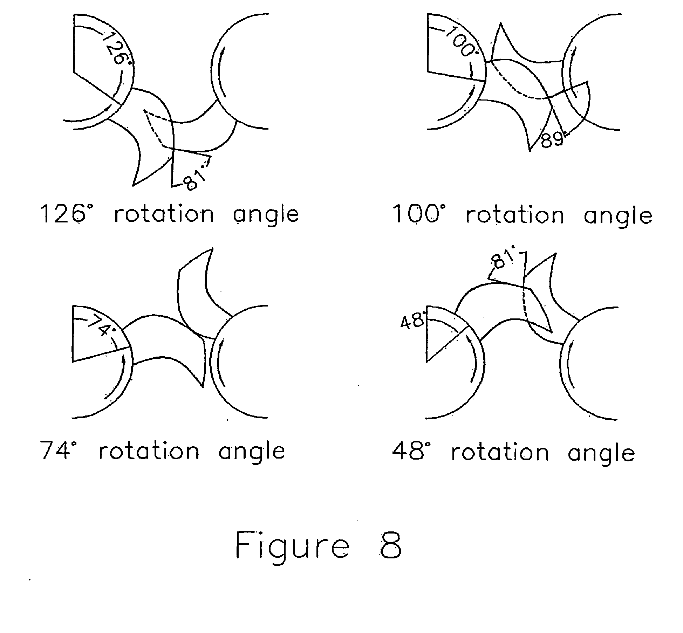

Figure 8 is a view similar to that of Figure 7, but where the fans rotate in opposite directions. The upstream fan rotates clockwise, and its trailing edge is forward-swept at the tip and back-swept at the root. The downstream fan rotates counter-clockwise, and its leading edge is back-swept at the tip. As in Figure 7, the downstream blade is shown at four different rotation angles, and the upstream blade is rotated in each case to show the intersection angle between the tip section of the downstream blade leading edge and the upstream blade trailing edge. Favorable intersection angles exist at three of the four rotation angles shown. At the 74 degree rotation angle the downstream blade leading edge is momentarily parallel to the upstream blade trailing edge, but this condition will only exist for a short period of time.

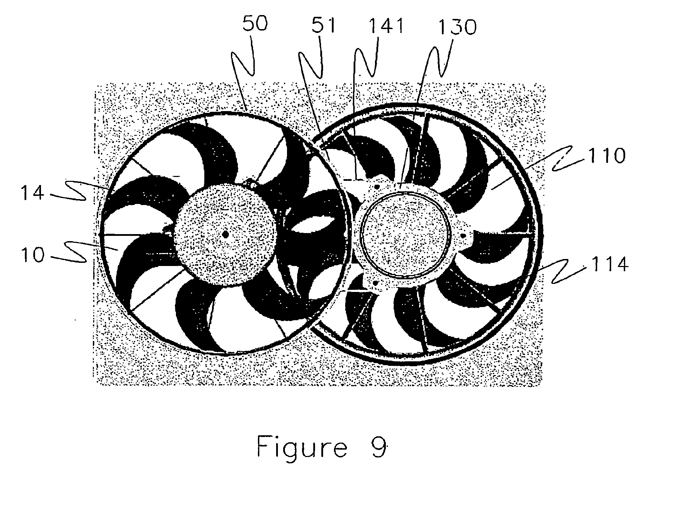

Figure 9 is a downstream axial view of an assembly similar to that shown in Figure 5. In this assembly fans 10 and 110 have blades 14 and 114 that are evenly-spaced at the roots and unevenly-spaced at the tips, in accordance with US patent no. 5,000,660. The use of unevenly-spaced blade tips on at least one, and preferably both, of the two fans can improve the subjective noise quality of the fan assembly. Similar noise improvement can be obtained by the use of unevenly-spaced blades.

Figure 9 also shows shroud barrel 50, which surrounds downstream fan 10, extended into the region downstream, of fan 110. Extension 51 provides additional support for motor mount 130, both directly and through additional support arms 141. A similar extension of the shroud barrel surrounding the upstream fan can provide structural benefit.

Those skilled in the art will recognize that other embodiments are within the following claims. For example, the invention may not include a plenum at all; alternatively, the invention may include a plenum, only a portion of which is integral with the barrel and motor mounts, the remainder of the plenum being provided as a separate part.

## Claims

1. An automotive engine-cooling fan assembly, comprising: a first fan (10), a second fan (110), said first fan and said second fan each having a diameter; said first fan and said second fan each comprising a hub (12, 112) and a plurality of elongated blades (14, 114), each of said blades having a root (142), a tip (141, 16, 116), a leading edge (143, 15, 115), and a trailing edge (144); a shroud (2); and a heat exchanger having a core (4); said shroud serving to guide the flow of air at least a portion of the distance between said fans and said heat exchanger, the fan assembly being **characterised in that** said first fan (10) is driven by a first motor (20), said first motor being supported by a first motor mount (30), said first motor mount being supported by a first set of arms (40), and said first set of arms being supported by said shroud (2); **in that** said second fan (110) is driven by a second motor (120), said second motor being supported by a second motor mount (130), said second motor mount being supported by a second set of arms (140), and said second set of arms being supported by said shroud (2); **in that** said first and second fans overlap each other when viewed axially from the upstream or downstream direction; and **in that** said first set of arms (40) is located upstream of said first fan (10) and said second set of arms (140) is located downstream of said second fan (110).

2. An automotive engine-cooling fan assembly according to Claim 1, further **characterised in that** a small clearance (18, 118) is maintained between said shroud (2) and each of said fans along the portion of the fan's circumference outside the overlap region.

3. An automotive engine-cooling fan assembly according to Claim 1, further **characterised in that** the axial position of said first fan (10) is substantially the same as the axial position of said second set of arms (140) and the axial position of said second fan (110) is substantially the same as the axial position of said first set of arms (40).

4. An automotive engine-cooling fan assembly according to Claim 1, further **characterised in that** when said first (40) and second (140) sets of arms are projected arms falls outside a first circular disk centred on the projection of the axis of said first fan, the diameter of said first disk being equal to the diameter of said first fan, and the projected area of said fist set of arms falls outside a second circular disk centred on the projection of the axis of said second fan, the diameter of said second disk being equal to the diameter of said second fan.

5. An automotive engine-cooling fan assembly according to Claim 1, further **characterised in that** the distance between said heat exchanger core (4) and the farthest point on said first motor is between 0.8 and 1.25 times the distance between said core and the farthest point on said second motor.

6. An automotive engine-cooling fan assembly according to any of Claims 1 to 4, further comprising no additional fans.

7. An automotive engine-cooling fan assembly according to any of Claims 1 to 4, **characterised in** further comprising at least one fan in addition to said first and said second fan.

8. An automotive engine-cooling fan assembly according to Claim 6, further **characterised in that** said fans are arranged to move air through an approximately rectangular area of said heat-exchanger core, the larger dimension of said rectangular area being between 1.25 and 1.8 times the smallest dimension of said rectangular area.

9. An automotive engine-cooling fan assembly according to Claim 6, further **characterised in that** the diameters of the two fans are equal, or, if unequal, the diameter of the smaller of said fans is greater than 0.85 times the diameter of the larger of said fans.

10. An automotive engine-cooling fan assembly according to Claim 8, further **characterised in that** the diameter of at least one of said fans is greater than 0.75 times said smaller dimension of said rectangular area.

11. An automotive engine-cooling fan assembly according to any of Claims 1 to 4, further **characterised in that** the extent of overlap, when measured in a plane which contains the rotation axis of at least one of said fans and at least one point on the axis of the other fan, is greater than 10 percent of the diameter of the smaller of said fans, and less than the blade span of the smaller of said fans.

12. An automotive engine-cooling fan assembly according to any of Claims 1 to 4, further **characterised in that** the motors are electric motors.

13. An automotive engine-cooling fan assembly according to any of Claims 1 to 4, further **characterised in** comprising a plenum between said fans and said heat-exchanger core, in which the depth of said plenum adjacent to the fan farther from the core is greater than the depth adjacent to the fan closer to the core.

14. An automotive engine-cooling fan assembly according to any of Claims 1 to 4, further **characterised in that** the clearance gap (18, 118) between said shroud (2) and each of said fans is less than 2 percent of the fan diameter along a substantial fraction of the non-overlapping portion of the fan's circumference.

15. An automotive engine-cooling fan assembly according to any of Claims 1 to 4, further **characterised in that** at least one of the fans is banded.

16. An automotive engine-cooling fan assembly according to any of Claims 1 to 4, further **characterised in that**, viewed axially from the downstream direction, one of said fans rotates in the clockwise direction and the other of said fans rotates in the counter-clockwise direction.

17. An automotive engine-cooling fan assembly according to any of Claims 1 to 4, further **characterised in that**, viewed axially from the downstream direction, both of said fans rotate in the same direction.

18. An automotive engine-cooling fan assembly according to any of Claims 1 to 4, further **characterised in that** said first fan has a first number of blades and said second fan has a second number of blades, and the first number of blades is unequal to the second number of blades.

19. An automotive engine-cooling fan assembly according to any of Claims 1 to 4, further **characterised in that** at least one of said plurality of blades has unevenly spaced blade tips.

20. An automotive engine-cooling fan assembly according to any of Claims 1 to 4, further **characterised in that** both of said fans have forward-swept leading edges at the tip.

21. An automotive engine-cooling fan assembly according to Claim 16, further **characterised in that** the downstream fan has tip leading-edge sweep which is opposite the upstream fan tip trailing-edge sweep.

22. An automotive engine-cooling fan assembly according to Claim 17, further **characterised in that** the downstream fan has tip leading-edge sweep which is of the same sign as the upstream fan tip trailing-edge sweep.

23. An automotive engine-cooling fan assembly according to Claim 21, further **characterised in that** upstream fan has root trailing-edge sweep in a direction opposite the tip trailing-edge sweep.

24. An automotive engine-cooling fan assembly according to Claim 22, further **characterised in that** upstream fan has root trailing-edge sweep in a direction opposite the tip trailing-edge sweep.

25. An automotive engine-cooling fan assembly according to any of Claims 1 to 4, further **characterised in that** said fans are made of injection-moulded plastic.

26. An automotive engine-cooling fan assembly according to any of Claims 1 to 4, further **characterised in that** said first motor mount (20), said first set of arms (40), said second motor mount (120), said second set of arms (140), and at least a portion of said shroud (2) are made of injection-moulded plastic.

27. An automotive engine-cooling fan assembly according to Claim 26, further **characterised in that** a single injection moulded part comprises said first motor mount (20), said first set of aims (40), said second motor mount (120), said second set of arms (140), and at least a portion of said shroud (2).

28. An automotive engine-cooling fan assembly according to Claim 1, further **characterised in that** a projection of the shroud opening in a plane perpendicular to at least one fan axis is two generally circular elements that overlap in the region of fan overlap.

29. An automotive engine-cooling fan assembly according to any of Claims 1 to 4, further **characterised in that** the shroud comprises a barrel surrounding said first fan, and said barrel extends into the region axially downstream of said second fan, and contributes to the support of said second motor mount.

30. An automotive engine-cooling fan assembly according to any of Claims 1 to 4, further **characterised in that** the shroud comprises a barrel surrounding said second fan, and said barrel extends into the region axially upstream of said first fan, and contributes to the support of said first motor mount.

## Patentansprüche

1. Ventilatoranordnung zum Kühlen eines Kraftfahrzeugmotors mit:
einem ersten Ventilator (10), einem zweiten Ventilator (110), wobei der erste Ventilator und der zweite Ventilator jeweils einen Durchschnitt aufweisen; wobei der erste Ventilator und der zweite Ventilator jeweils eine Nabe (12, 112) und eine Vielzahl länglicher Flügelblätter
(14, 114) aufweisen, wobei jedes dieser Flügelblätter einen Fuß (142), eine Spitze (141, 16, 116), eine Anströmkante (143, 15, 115) und eine Abströmkante (144) aufweist; einer Verkleidung (2); und
einem Wärmetauscher mit einem Kern (4); wobei die Verkleidung dazu dient, den Luftstrom über mindestens einen Teil des Abstands zwischen den Ventilatoren und dem Wärmetauscher zu führen; wobei die Ventilatoranordnung
**dadurch gekennzeichnet ist, dass**
der erste Ventilator (10) von einem ersten Motor (20) angetrieben wird, der erste Motor von einer ersten Motorhalterung (30) gehalten wird, wobei die erste Motorhalterung von einem ersten Satz Arme (40), und der erste Satz Arme von der Verkleidung (2) gehalten werden; der zweite Ventilator (110) von einem zweiten Motor (120) angetrieben wird, wobei der zweite Motor von einer zweiten Motorhalterung (130) gehalten wird, wobei die zweite Motorhalterung von einem zweiten Satz Arme (140) gehalten wird, und der zweite Satz Arme von der Verkleidung (2) gehalten wird; der erste und zweite Ventilator sich axial aus der Stromaufwärts- bzw. Stromabwärtsrichtung gesehen gegenseitig überlappen; und der erste Satz Arme (40) stromaufwärts vom ersten Ventilator (10) aus liegt und der zweite Satz Arme (140) stromabwärts vom zweiten Ventilator (110) aus liegt.

2. Ventilatoranordnung zum Kühlen eines Kraftfahrzeugmotors nach Anspruch 1,
des weiteren **gekennzeichnet dadurch, dass**
ein kleiner Zwischenraum (18, 118) gehalten wird zwischen der Verkleidung (2) und jedem der beiden Ventilatoren entlang des außerhalb des Überlappungsbereichs liegenden Teils des Ventilatorumfangs.

3. Ventilatoranordnung zum Kühlen eines Kraftfahrzeugmotors nach Anspruch 1,
des weiteren **gekennzeichnet dadurch, dass**
die Axiallage des ersten Ventilators (10) im wesentlichen dieselbe ist wie die Axiallage des zweiten Satzes Arme (140) und die Axiallage des zweiten Ventilators (110) im wesentlichen dieselbe ist wie die Axiallage des ersten Satzes Arme (40).

4. Ventilatoranordnung zum Kühlen eines Kraftfahrzeugmotors nach Anspruch 1,
des weiteren **gekennzeichnet dadurch, dass**,
wenn der erste Satz (40) Arme und der zweite Satz (140) Arme in eine Ebene ragen, die im rechten Winkel zu der Achse eines der beiden Ventilatoren verläuft, und der erste und der zweite Ventilator in die Ebene ragen, der ausragende Bereich des zweiten Satzes Arme außerhalb einer ersten auf der Fortsetzung der Achse des ersten Ventilators zentrierten kreisförmigen Scheibe fällt, wobei der Durchmesser der ersten Scheibe gleich dem Durchmesser des ersten Ventilators ist, und der ausragende Bereich des ersten Satzes Arme außerhalb einer zweiten auf der Fortsetzung der Achse des zweiten Ventilators zentrierten, kreisförmigen Scheibe fällt, wobei der Durchmesser des zweiten Kreises gleich dem Durchmesser des zweiten Ventilators ist.

5. Ventilatoranordnung zum Kühlen eines Kraftfahrzeugmotors nach Anspruch 1,
des weiteren **gekennzeichnet dadurch, dass**
der Abstand zwischen dem Wärmetauscherkern (4) und dem am weitesten entfernt liegenden Punkt auf dem ersten Motor das zwischen 0,8- und 1,25-Fache des Abstandes zwischen dem Kern und dem am weitesten entfernt liegenden Punkt auf dem zweiten Motor beträgt.

6. Ventilatoranordnung zum Kühlen eines Kraftfahrzeugmotors nach einem der Ansprüche 1 bis 4,
des weiteren keine zusätzlichen Ventilatoren umfassend.

7. Ventilatoranordnung zum Kühlen eines Kraftfahrzeugmotors nach einem der Ansprüche 1 bis 4,
**gekennzeichnet dadurch, dass**
des weiteren mindestens ein zusätzlicher Ventilator zum ersten und zweiten Ventilator umfasst ist.

8. Ventilatoranordnung zum Kühlen eines Kraftfahrzeugmotors nach Anspruch 6,
des weiteren **gekennzeichnet dadurch, dass**
die Ventilatoren so angeordnet sind, dass sie Luft durch einen etwa rechteckigen Bereich des Wärmetauscherkerns bewegen, wobei die größere Abmessung des rechteckigen Bereichs das zwischen 1,25- und 1,8-Fache der kleinsten Abmessung des rechteckigen Bereichs beträgt.

9. Ventilatoranordnung zum Kühlen eines Kraftfahrzeugmotors nach Anspruch 6,
des weiteren **gekennzeichnet dadurch, dass**
die Durchmesser der zwei Ventilatoren gleich sind, bzw., wenn sie ungleich sind, der Durchmesser des kleineren der Ventilatoren größer als das 0,85-Fache des Durchmessers des größeren der Ventilatoren ist.

10. Ventilatoranordnung zum Kühlen eines Kraftfahrzeugmotors nach Anspruch 8,
des weiteren **gekennzeichnet dadurch, dass**
der Durchmesser mindestens eines der Ventilatoren größer ist als das 0,75-Fache der kleineren Abmessung des rechteckigen Bereichs.

11. Ventilatoranordnung zum Kühlen eines Kraftfahrzeugmotors nach einem der Ansprüche 1 bis 4,
des weiteren **gekennzeichnet dadurch, dass**
das Ausmaß der Überlappung, gemessen in einer Ebene, die die Rotationsachse mindestens eines der Ventilatoren und mindestens einen Punkt auf der Achse des anderen Ventilators umfasst, größer als 10 Prozent des Durchmessers des kleineren der Ventilatoren,
und geringer als die Flügelblattspanne des kleineren der Ventilatoren ist.

12. Ventilatoranordnung zum Kühlen eines Kraftfahrzeugmotors nach einem der Ansprüche 1 bis 4,
des weiteren **gekennzeichnet dadurch, dass**
die Motoren Elektromotoren sind.

13. Ventilatoranordnung zum Kühlen eines Kraftfahrzeugmotors nach einem der Ansprüche 1 bis 4,
des weiteren **gekennzeichnet dadurch, dass**
ein Zwischenraum zwischen den Ventilatoren und dem Wärmetauscherkern umfasst ist, in dem die Tiefe des an den vom Kern entfernter gelegenen Ventilator angrenzenden Zwischenraums größer ist als die Tiefe zu dem dem Kern nähergelegenen Ventilator.

14. Ventilatoranordnung zum Kühlen eines Kraftfahrzeugmotors nach einem der Ansprüche 1 bis 4,
des weiteren **dadurch gekennzeichnet, dass**
der Zwischenraum (18, 118) zwischen der Verkleidung (2) und jedem der Ventilatoren geringer ist als 2 Prozent des Ventilatordurchmessers entlang eines wesentlichen Teils des nicht-überlappenden Teils des Ventilatorumfangs.

15. Ventilatoranordnung zum Kühlen eines Kraftfahrzeugmotors nach einem der Ansprüche 1 bis 4,
des weiteren **gekennzeichnet dadurch, dass**
mindestens einer der Ventilatoren beringt ist.

16. Ventilatoranordnung zum Kühlen eines Kraftfahrzeugmotors nach einem der Ansprüche 1 bis 4,
des weiteren **dadurch gekennzeichnet, dass**
axial aus der Stromabwärtsrichtung gesehen, einer der Ventilatoren im Uhrzeigersinn rotiert und der andere der Ventilatoren gegen den Uhrzeigersinn rotiert.

17. Ventilatoranordnung zum Kühlen eines Kraftfahrzeugmotors nach einem der Ansprüche 1 bis 4,
des weiteren **dadurch gekennzeichnet, dass**
axial aus der Stromabwärtsrichtung gesehen, beide Ventilatoren in der selben Richtung rotieren.

18. Ventilatoranordnung zum Kühlen eines Kraftfahrzeugmotors nach einem der Ansprüche 1 bis 4,
des weiteren **dadurch gekennzeichnet, dass**
der erste Ventilator eine erste Anzahl von Flügelblättern und der zweite Ventilator eine zweite Anzahl von Flügelblättern aufweist, und die erste Anzahl von Flügelblättern ungleich der zweiten Anzahl von Flügelblättern ist.

19. Ventilatoranordnung zum Kühlen eines Kraftfahrzeugmotors nach einem der Ansprüche 1 bis 4,
des weiteren **dadurch gekennzeichnet, dass**
mindestens eines von der Vielzahl an Flügelblättern ungleichmäßig beabstandete Flügelblattspitzen aufweist.

20. Ventilatoranordnung zum Kühlen eines Kraftfahrzeugmotors nach einem der Ansprüche 1 bis 4,
des weiteren **dadurch gekennzeichnet, dass**
beide Ventilatoren an der Spitze nach vorne geneigte Anströmkanten aufweisen.

21. Ventilatoranordnung zum Kühlen eines Kraftfahrzeugmotors nach Anspruch 16,
des weiteren **dadurch gekennzeichnet, dass**
der stromabwärts liegende Ventilator eine Neigung der Anströmkantenspitze aufweist, die zur Neigung der Abströmkantenspitze des stromaufwärts liegenden Ventilators gegensinnig ist.

22. Ventilatoranordnung zum Kühlen eines Kraftfahrzeugmotors nach Anspruch 17,
des weiteren **gekennzeichnet dadurch,**
**dass** der stromabwärts liegende Ventilator eine Neigung der Anströmkantenspitze aufweist, die zur Neigung der Abströmkantenspitze des stromaufwärts liegenden Ventilators gleichsinnig ist.

23. Ventilatoranordnung zum Kühlen eines Kraftfahrzeugmotors nach Anspruch 21,
des weiteren **gekennzeichnet dadurch, dass**
der stromaufwärts liegende Ventilator eine Neigung des Abströmkantenfusses in einer zur Neigung der Abströmkantenspitze entgegengesetzten Richtung aufweist.

24. Ventilatoranordnung zum Kühlen eines Kraftfahrzeugmotors nach Anspruch 22,
des weiteren **gekennzeichnet dadurch, dass**
der stromaufwärts liegende Ventilator eine Neigung des Abströmkantenfusses in einer zur Neigung der Abströmkantenspitze entgegengesetzten Richtung aufweist.

25. Ventilatoranordnung zum Kühlen eines Kraftfahrzeugmotors nach einem der Ansprüche 1 bis 4,
des weiteren **dadurch gekennzeichnet, dass**
die Ventilatoren aus spritzgegossenem Kunststoff sind.

26. Ventilatoranordnung zum Kühlen eines Kraftfahrzeugmotors nach einem der Ansprüche 1 bis 4,
des weiteren **dadurch gekennzeichnet, dass**
die erste Motorhalterung (20), der erste Satz Arme (40), die zweite Motorhalterung (120), der zweite Satz Arme (140) und mindestens ein Teil der Verkleidung (2) aus spritzgegossenem Kunststoff sind.

27. Ventilatoranordnung zum Kühlen eines Kraftfahrzeugmotors nach Anspruch 26,
des weiteren **gekennzeichnet dadurch, dass**
ein einziges spritzgegossenes Teil die erste Motorhalterung (20), den ersten Satz Arme (40), die zweite Motorhalterung (120), den zweiten Satz Arme (140) und mindestens einen Teil der Verkleidung (2) umfasst.

28. Ventilatoranordnung zum Kühlen eines Kraftfahrzeugmotors nach Anspruch 1,
des weiteren **dadurch gekennzeichnet, dass**
ein in eine zu mindestens einer Ventilatorachse im rechten Winkel verlaufenden Ebene reichender Fortsatz der Verkleidung aus zwei allgemein kreisförmigen Elementen besteht, die im Bereich der Überlappung der Ventilatoren überlappen.

29. Ventilatoranordnung zum Kühlen eines Kraftfahrzeugmotors nach einem der Ansprüche 1 bis 4,
des weiteren **dadurch gekennzeichnet, dass**
die Verkleidung eine den ersten Ventilator umgebende Trommel umfasst und die Trommel in den axial stromabwärts vom zweiten Ventilator gelegenen Bereich ragt und zum Halten der zweiten Motorhalterung beiträgt.

30. Ventilatoranordnung zum Kühlen eines Kraftfahrzeugmotors nach einem der Ansprüche 1 bis 4,
des weiteren **dadurch gekennzeichnet, dass**
die Verkleidung eine den zweiten Ventilator umgebende Trommel umfasst und die Trommel in den axial stromaufwärts vom ersten Ventilator gelegenen Bereich ragt und zum Halten der ersten Motorhalterung beiträgt.

## Revendications

1. Un ensemble de ventilateurs de refroidissement de moteur thermique de véhicule automobile, comprenant : un premier ventilateur (10), un deuxième ventilateur (110), lesdits premier et deuxième ventilateurs présentant chacun un diamètre ; ledit premier ventilateur et ledit deuxième ventilateur comportant chacun un moyeu (12, 112) et une pluralité de pales oblongues (14, 114), chacune desdites pales présentant une racine ou base (142), une extrémité extérieure (141, 16, 116), un bord avant (143, 15, 115) et un bord de fuite (144) ; un capotage annulaire (2) ; et un échangeur de chaleur présentant un cadre (4) ; ledit capotage annulaire servant à guider le flux d'air sur au moins une partie de la distance entre lesdits ventilateurs et ledit échangeur de chaleur ; l'ensemble de ventilateurs étant **caractérisé en ce que** ledit premier ventilateur (10) est entraîné par un premier moteur (20) non thermique, ledit premier moteur non thermique étant supporté par un premier support (30) de moteur non thermique, ledit premier support de moteur non thermique étant supporté par un premier jeu de bras (40), et ledit premier jeu de bras étant supportés par ledit capotage annulaire (2) ; **en ce que** ledit deuxième ventilateur (110) est entraîné par un deuxième moteur (120) non thermique, ledit deuxième moteur non thermique étant supporté par un deuxième support (130) de moteur non thermique, ledit deuxième support de moteur non thermique est supporté par un deuxième jeu de bras (140), et ledit deuxième jeu de bras étant supporté par ledit capotage annulaire (2) ; **en ce que** lesdits premier et deuxième ventilateurs se recouvrent mutuellement l'un l'autre lorsqu'on regarde axialement à partir de la direction amont ou aval, et **en ce que** ledit premier jeu de bras (40) est disposé à l'amont dudit premier ventilateur (10) et ledit deuxième jeu de bras (140) est disposé à l'aval dudit deuxième ventilateur (110).

2. Un ensemble de ventilateurs de refroidissement de moteur thermique de véhicule automobile selon la revendication 1, en outre **caractérisé en ce qu'**un faible jeu (18, 118) est maintenu entre ledit capotage annulaire (2) et chacun desdits ventilateurs le long de la partie de circonférence de ventilateur située à l'extérieur de la zone de recouvrement.

3. Un ensemble de ventilateurs de refroidissement de moteur thermique de véhicule automobile selon la revendication 1, en outre **caractérisé en ce que** la position axiale dudit premier ventilateur (10) est sensiblement la même que la position axiale dudit deuxième jeu de bras (140) et **en ce que** la position axiale dudit deuxième ventilateur (110) est sensiblement la même que la position axiale dudit premier jeu de bras (40).

4. Un ensemble de ventilateurs de refroidissement de moteur thermique de véhicule automobile selon la revendication 1, en outre **caractérisé en ce que** lorsque l'on projette lesdits premier (40) et deuxième (140) jeux de bras sur un plan perpendiculaire à l'axe de l'un ou des deux dits ventilateurs, et lorsque l'on projette lesdits premier et deuxième ventilateurs sur ledit plan, la surface projetée dudit deuxième jeu de bras tombe à l'extérieur du premier disque circulaire centré sur la projection de l'axe dudit premier ventilateur. Le diamètre dudit premier disque étant égal au diamètre dudit premier ventilateur, et **en ce que** la surface projetée dudit premier jeu de bras tombe à l'extérieur d'un deuxième disque circulaire centré sur la projection de l'axe dudit deuxième ventilateur, le diamètre dudit deuxième disque étant égal au diamètre dudit deuxième ventilateur.

5. Un ensemble de ventilateurs de refroidissement de moteur thermique de véhicule automobile selon la revendication 1, en outre **caractérisé en ce que** la distance entre ledit cadre (4) d'échangeur de chaleur et le point le plus éloigné sur ledit premier moteur non thermique est comprise entre 0,8 et 1,25 fois la distance entre ledit cadre et le point le plus éloigné sur ledit deuxième moteur non thermique.

6. Un ensemble de ventilateurs de refroidissement de moteur thermique de véhicule automobile selon l'une quelconque des revendications 1 à 4, ne comprenant en outre aucun ventilateur additionnel.

7. Un ensemble de ventilateurs de refroidissement de moteur thermique de véhicule automobile selon l'une quelconque des revendications 1 à 4, **caractérisé en ce qu'**il comprend en outre au moins un ventilateur en plus desdits premier et deuxième ventilateurs.

8. Un ensemble de ventilateurs de refroidissement de moteur thermique de véhicule automobile selon 1a revendication 6, en outre **caractérisé en ce que** lesdits ventilateurs sont agencés pour propulser de l'air à travers une surface approximativement rectangulaire dudit cadre d'échangeur de chaleur, la plus grande dimension de ladite surface rectangulaire étant comprise entre 1,25 et 1,8 fois la plus petite dimension de ladite surface rectangulaire.

9. Un ensemble de ventilateurs de refroidissement de moteur thermique de véhicule automobile selon la revendication 6, en outre **caractérisé en ce que** les diamètres des deux ventilateurs sont égaux, ou bien, dans le cas où ils sont inégaux, le diamètre du plus petit desdits ventilateurs est supérieur à 0,85 fois le diamètre du plus grand desdits ventilateurs.

10. Un ensemble de ventilateurs de refroidissement de moteur thermique de véhicule automobile selon la revendication 8, en outre **caractérisé en ce que** le diamètre d'au moins l'un desdits ventilateurs est supérieur à 0,75 fois ladite plus petite dimension de ladite surface rectangulaire.

11. Un ensemble de ventilateurs de refroidissement de moteur thermique de véhicule automobile selon l'une quelconque des revendications 1 à 4, en outre **caractérisé en ce que** l'étendue du recouvrement, lorsqu'il est mesuré dans un plan qui contient l'axe de rotation d'au moins l'un desdits ventilateurs et au moins un point sur l'axe de l'autre ventilateur, est supérieur à 10 % du diamètre du plus petit desdits ventilateurs, et inférieur à la longueur des pales du plus petit desdits ventilateurs.

12. Un ensemble de ventilateurs de refroidissement de moteur thermique de véhicule automobile selon l'une quelconque des revendications 1 à 4, en outre **caractérisé en ce que** les moteurs non thermiques sont des moteurs électriques.

13. Un ensemble de ventilateurs de refroidissement de moteur thermique de véhicule automobile selon l'une quelconque des revendications 1 à 4, en outre **caractérisé en ce qu'**il comprend un collecteur d'air entre lesdits ventilateurs et ledit cadre d'échangeur de chaleur, la profondeur dudit collecteur d'air adjacent au ventilateur le plus éloigné du cadre étant supérieure à la profondeur adjacente au ventilateur le plus proche du cadre.

14. Un ensemble de ventilateurs de refroidissement de moteur thermique de véhicule automobile selon l'une quelconque des revendications 1 à 4, en outre **caractérisé en ce que** l'intervalle de jeu (18, 118) entre ledit capotage annulaire (2) et chacun desdits ventilateurs est inférieur à 2 % du diamètre de ventilateur le long d'une fraction importante de la partie non recouvrante de la circonférence du ventilateur.

15. Un ensemble de ventilateurs de refroidissement de moteur thermique de véhicule automobile selon l'une quelconque des revendications 1 à 4, en outre **caractérisé en ce qu'**au moins l'un des ventilateurs est muni d'un cercle extérieur reliant les pales entre elles.

16. Un ensemble de ventilateurs de refroidissement de moteur thermique de véhicule automobile selon l'une quelconque des revendications 1 à 4, en outre **caractérisé en ce que**, en regardant axialement dans la direction de l'aval, l'un desdits ventilateurs tourne dans le sens des aiguilles d'une montre et l'autre desdits ventilateurs tourne dans le sens inverse à celui des aiguilles d'une montre.

17. Un ensemble de ventilateurs de refroidissement de moteur thermique de véhicule automobile selon l'une quelconque des revendications 1 à 4, en outre **caractérisé en ce que**, en regardant axialement depuis la direction avale, les deux dits ventilateurs tournent dans le même sens.

18. Un ensemble de ventilateurs de refroidissement de moteur thermique de véhicule automobile selon l'une des revendications 1 à 4, en outre **caractérisé en ce que** ledit premier ventilateur comporte un premier nombre de pales et ledit deuxième ventilateur comporte un deuxième nombre de pales, le premier nombre de pales n'étant pas égal au deuxième nombre de pales.

19. Un ensemble de ventilateurs de refroidissement de moteur thermique de véhicule automobile selon l'une quelconque des revendications 1 à 4, en outre **caractérisé en ce qu'**au moins l'une parmi ladite pluralité de pales comporte des extrémités de pales irrégulièrement espacées.

20. Un ensemble de ventilateurs de refroidissement de moteur thermique de véhicule automobile selon l'une quelconque des revendications 1 à 4, en outre **caractérisé en ce que** les deux dits ventilateurs comportent des bords de tête inclinés vers l'avant à l'extrémité extérieure des pales.

21. Un ensemble de ventilateurs de refroidissement de moteur thermique de véhicule automobile selon la revendication 16, en outre **caractérisé en ce que** le ventilateur aval présente, sur le bord de tête de l'extrémité extérieure des pales, un décalage ou déport angulaire de l'axe des pales dans un plan perpendiculaire à l'axe de l'hélice du ventilateur, décalage angulaire qui est opposé au décalage angulaire sur le bord de fuite de l'extrémité extérieure des pales, des pales de ventilateur amont, dans un plan perpendiculaire à l'axe de l'hélice de ce ventilateur amont.

22. Un ensemble de ventilateurs de refroidissement de moteur thermique de véhicule automobile selon la revendication 17, en outre **caractérisé en ce que** le ventilateur aval présente, sur le bord de tête de l'extrémité extérieure des pales, un décalage ou déport angulaire de l'axe des pales dans un plan perpendiculaire au plan de l'hélice, décalage angulaire qui est de même sens que le décalage angulaire sur le bord de fuite de l'extrémité extérieure des pales, dans un plan perpendiculaire à l'axe de ce ventilateur avant.

23. Un ensemble de ventilateurs de refroidissement de moteur thermique de véhicule automobile selon la revendication 21, en outre **caractérisé en ce que** le ventilateur amont présente, au racine des pales, un décalage ou déport angulaire de l'axe des pales dans un plan perpendiculaire à l'axe de l'hélice, décalage qui est dans une direction opposée au décalage ou déport angulaire de bord de fuite de l'extrémité extérieure des pales.

24. Un ensemble de ventilateurs de refroidissement de moteur thermique de véhicule automobile selon la revendication 22, en outre **caractérisé en ce que** le ventilateur amont présente à la racine ou base des pales, sur le bord de tête de l'extrémité extérieure des pales, un décalage ou déport angulaire dans une direction opposée à celle du décalage ou déport angulaire de bord de fuite de l'extrémité extérieure des pales.

25. Un ensemble de ventilateurs de refroidissement de moteur thermique de véhicule automobile selon l'une quelconque des revendications 1 à 4, en outre **caractérisé en ce que** lesdits ventilateurs sont réalisés en matière plastique moulée par injection.

26. Un ensemble de ventilateurs de refroidissement de moteur thermique de véhicule automobile selon l'une quelconque des revendications 1 à 4, en outre **caractérisé en ce que** ledit support (20) de moteur non thermique, ledit premier jeu de bras (40), ledit deuxième support (120) de moteur non thermique, ledit deuxième jeu de bras (130) et au moins une partie dudit capotage annulaire (2) sont réalisés en matière plastique moulée par injection.

27. Un ensemble de ventilateurs de refroidissement de moteur thermique de véhicule automobile selon la revendication 26, en outre **caractérisé en ce qu'**une pièce monobloc moulée par injection comporte ledit premier support (20) de moteur non thermique, ledit premier jeu de bras (40), ledit deuxième support (120) de moteur non thermique, ledit deuxième jeu de bras (140) et au moins une partie dudit capotage annulaire (2).

28. Un ensemble de ventilateurs de refroidissement de moteur thermique de véhicule automobile selon la revendication 1, en outre **caractérisé en qu'**une projection de l'ouverture du capotage annulaire dans un plan perpendiculaire à au moins un axe de ventilateur est constituée par deux éléments de forme générale circulaire et qui se recouvrent dans la zone de recouvrement.

29. Un ensemble de ventilateurs de refroidissement de moteur thermique de véhicule automobile selon l'une quelconque des revendications 1 à 4, en outre **caractérisé en ce que** le capotage annulaire comprend un capotage en tambour entourant ledit premier ventilateur et **en ce que** ledit capotage en tambour s'étend dans la zone axialement en aval dudit deuxième ventilateur, et contribue à constituer le support dudit deuxième support de moteur non thermique.

30. Un ensemble de ventilateurs de refroidissement de moteur thermique de véhicule automobile selon l'une quelconque des revendications 1 à 4, en outre **caractérisé en ce que** le capotage annulaire comprend un capotage en tambour entourant ledit deuxième ventilateur et **en ce que** ledit capotage en tambour s'étend dans la zone axialement à l'amont dudit premier ventilateur, et contribue à supporter ledit premier support de moteur non thermique.
